(19) Europäisches Patentamt
European Patent Office
Office européen des brevets

(11) **EP 3 921 527 B1**

(12) **FASCICULE DE BREVET EUROPEEN**

(45) Date de publication et mention
de la délivrance du brevet:
**01.03.2023 Bulletin 2023/09**

(21) Numéro de dépôt: **20700847.5**

(22) Date de dépôt: **22.01.2020**

(51) Classification Internationale des Brevets (IPC):
**F02C 7/047** *(2006.01)*    **B64D 15/04** *(2006.01)*
**F02C 7/045** *(2006.01)*

(52) Classification Coopérative des Brevets (CPC):
**F02C 7/047; B64D 15/04; B64D 33/02;**
**F02C 7/045;** B64D 29/00; B64D 2033/0233;
F05D 2240/127; F05D 2260/14; F05D 2260/96;
Y02T 50/60

(86) Numéro de dépôt international:
**PCT/EP2020/051511**

(87) Numéro de publication internationale:
**WO 2020/160906 (13.08.2020 Gazette 2020/33)**

(54) **ENTRÉE D'AIR D'UNE NACELLE DE TURBORÉACTEUR D'AÉRONEF COMPORTANT DES OUVERTURES DE VENTILATION D'UN FLUX D'AIR CHAUD DE DÉGIVRAGE**

LUFTEINLASS EINER FLUGZEUGTRIEBWERKSGONDEL MIT VENTILATIONSÖFFNUNGEN FÜR EINEN HEISSLUFTSTROM ZUR ENTEISUNG

AIR INTAKE OF AN AIRCRAFT TURBOJET ENGINE NACELLE COMPRISING VENTILATION ORIFICES FOR A DE-ICING FLOW OF HOT AIR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2019 FR 1901277**

(43) Date de publication de la demande:
**15.12.2021 Bulletin 2021/50**

(73) Titulaire: **Safran Nacelles**
**76700 Gonfreville-l'Orcher (FR)**

(72) Inventeurs:
• **PASCAL, Sébastien, Laurent, Marie**
**77550 MOISSY-CRAMAYEL (FR)**

• **NOGUES, Jean-Michel, Paul, Ernest**
**77550 MOISSY-CRAMAYEL (FR)**
• **VERSAEVEL, Marc**
**77550 MOISSY-CRAMAYEL (FR)**
• **CHAUVEAU, François**
**77550 MOISSY-CRAMAYEL (FR)**

(74) Mandataire: **Argyma**
**14 Boulevard de Strasbourg**
**31000 Toulouse (FR)**

(56) Documents cités:
**EP-A1- 0 921 293        EP-B1- 0 921 293**
**US-A1- 2009 194 633    US-A1- 2015 001 003**
**US-B2- 8 931 252**

## Description

### DOMAINE TECHNIQUE DE L'INVENTION

La présente invention concerne le domaine des turboréacteurs d'aéronef et vise plus particulièrement une entrée d'air d'une nacelle d'un turboréacteur d'aéronef comportant un dispositif de dégivrage.

De manière connue, un aéronef comporte un ou plusieurs turboréacteurs pour permettre sa propulsion par accélération d'un flux d'air qui circule d'amont en aval dans le turboréacteur.

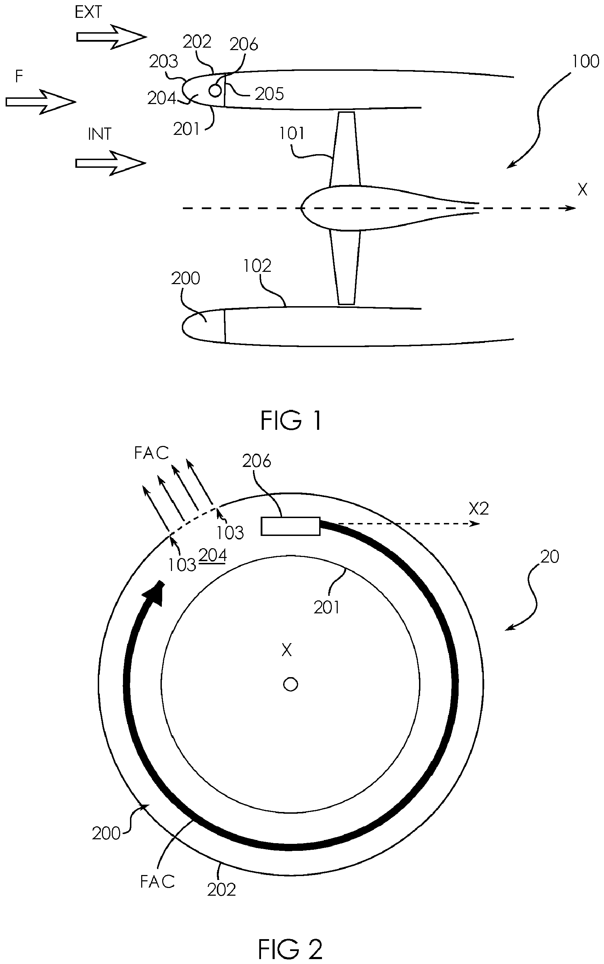

En référence à la figure 1, il est représenté un turboréacteur 100 s'étendant selon un axe X et comportant une soufflante 101 montée rotative autour de l'axe X dans une nacelle comportant une virole extérieure 102 afin d'accélérer un flux d'air F d'amont vers l'aval. Par la suite, les termes amont et aval sont définis par rapport à la circulation du flux d'air F. La nacelle comporte à son extrémité amont une entrée d'air 200 comportant une paroi intérieure 201 tournée vers l'axe X et une paroi extérieure 202 qui est opposée à la paroi intérieure 201, les parois 201, 202 sont reliées par un bord d'attaque 203 également appelé « lèvre de l'entrée d'air ». Ainsi, l'entrée d'air 200 permet de séparer le flux d'air entrant F en un flux d'air intérieur INT guidé par la paroi intérieure 201 et un flux d'air extérieur EXT guidé par la paroi extérieure 202. Les parois 201, 202 sont reliées par le bord d'attaque 203 et une cloison interne 205 de manière à délimiter une cavité annulaire 204 connue de l'homme du métier sous la désignation de « D-DUCT ». Par la suite, les termes intérieur et extérieur sont définis radialement par rapport à l'axe X du turboréacteur 100.

De manière connue, lors du vol d'un aéronef, du fait des conditions de température et de pression, du givre est susceptible de s'accumuler au niveau du bord d'attaque 203 et de la paroi intérieure 201 de l'entrée d'air 200 et de former des blocs de givre qui sont susceptibles d'être ingérés par le turboréacteur 100. De telles ingestions doivent être évitées afin d'améliorer la durée de vie du turboréacteur 100 et réduire les dysfonctionnements.

Pour éliminer l'accumulation de givre, en référence à la figure 1, il est connu de prévoir un dispositif de dégivrage comportant un injecteur 206 d'un flux d'air chaud FAC dans la cavité intérieure 204. La circulation d'un tel flux d'air chaud FAC permet, par échange thermique, de chauffer la paroi intérieure 201, la paroi extérieure 202 et la lèvre 203 et ainsi éviter l'accumulation de givre qui fond ou s'évapore au fur et à mesure de son accumulation. De manière connue, en référence aux figures 2 et 3, la cavité intérieure 204 comporte des ouvertures de ventilation 103 formées dans la paroi extérieure 202 de l'entrée d'air 200 de manière à permettre l'évacuation du flux d'air chaud FAC après chauffage de la cavité intérieure 204. A titre d'exemple, en référence à la figure 3, chaque ouverture de ventilation 103 possède une forme allongée selon l'axe moteur X, de préférence, oblongue.

En pratique, des nuisances acoustiques apparaissent lors de la circulation du flux d'air extérieur EXT sur les ouvertures de ventilation 103, en particulier, des sifflements et/ou des résonances. De telles nuisances acoustiques sont accrues lorsque le dispositif de dégivrage est inactif.

Une solution immédiate pour éliminer cet inconvénient est de prévoir une conduite de ventilation reliant la cavité intérieure 204 à des ouvertures de ventilation déportées de la paroi extérieure de l'entrée d'air. De préférence, une telle conduite de ventilation permet de positionner les ouvertures de ventilation dans une zone dans laquelle la vitesse du flux d'air extérieur EXT est plus basse, ce qui limite les perturbations acoustiques. En pratique, l'ajout d'une conduite de ventilation augmente l'encombrement et la masse du turboréacteur, ce qui n'est pas souhaité. De plus, une conduite de ventilation présente l'inconvénient d'éjecter un flux d'air chaud FAC à proximité de zones aval sensibles à la chaleur, par exemple, en matériau composite.

Un des objectifs de la présente invention est de proposer une entrée d'air comportant des ouvertures de ventilation formées dans la paroi extérieure de l'entrée d'air et n'induisant pas de nuisances acoustiques.

De manière incidente, on connaît par la demande de brevet US5257498 une grille de guidage incurvée du flux d'air chaud lors de son échappement mais elle n'a pas d'impact sur les nuisances acoustiques. Des entrées d'air sont également connues par les documents EP0921293 et US2015/001003.

### PRESENTATION DE L'INVENTION

L'invention concerne une entrée d'air d'une nacelle de turboréacteur d'aéronef conformément à la revendication 1 s'étendant selon un axe X dans lequel circule un flux d'air d'amont vers l'aval, l'entrée d'air s'étendant de manière circonférentielle autour de l'axe X et comportant une paroi intérieure tournée vers l'axe X pour guider un flux d'air intérieur INT et une paroi extérieure, qui est opposée à la paroi intérieure, pour guider un flux d'air extérieur EXT, les parois étant reliées par un bord d'attaque et une cloison interne de manière à délimiter une cavité annulaire, l'entrée d'air comportant des moyens d'injection d'au moins un flux d'air chaud FAC dans la cavité intérieure et au moins une ouverture de ventilation formée dans la paroi extérieure pour permettre l'échappement du flux d'air chaud FAC après chauffage de la cavité intérieure.

L'invention est remarquable en ce qu'elle comporte au moins un organe de perturbation du flux d'air extérieur EXT, positionné en amont de l'ouverture de ventilation, qui s'étend en saillie vers l'extérieur depuis la paroi extérieure. De manière avantageuse, un tel organe de perturbation permet d'éviter la formation de fluctuations de pression acoustique au voisinage de l'ouverture de ventilation.

De préférence, l'organe de perturbation possède une largeur au moins égale à la moitié de largeur de l'ouverture de ventilation, de préférence encore, à la largeur de l'ouverture de ventilation.

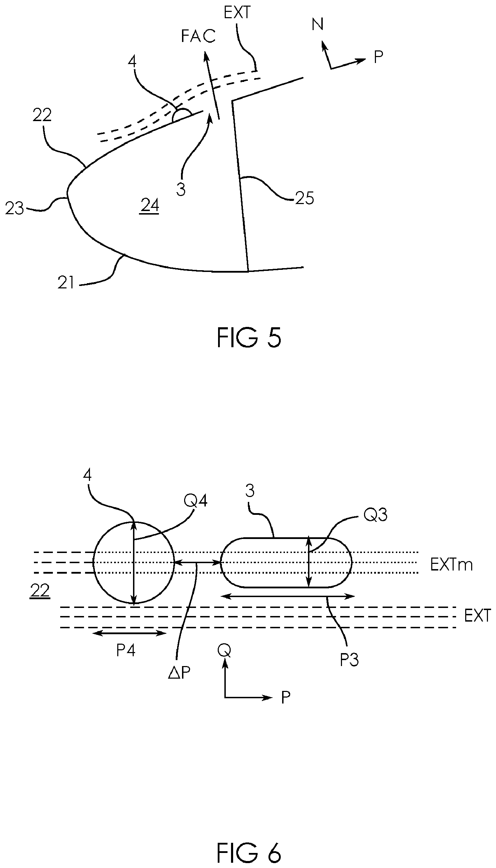

Selon un aspect, la distance entre l'organe de perturbation et l'ouverture de ventilation est comprise entre 0,5 et 3 fois la longueur de l'organe de perturbation. Par distance entre l'organe de perturbation et l'ouverture de ventilation, on entend la distance minimale entre les l'organe de perturbation et l'ouverture de ventilation, c'est-à-dire, celle qui relie l'extrémité aval de l'organe de perturbation à l'extrémité amont de l'ouverture de ventilation comme illustré à la figure 6.

Selon un autre aspect, la distance entre l'organe de perturbation et l'ouverture de ventilation est inférieure à 2 fois la longueur de l'ouverture de ventilation.

Selon un autre aspect, l'organe de perturbation possède une hauteur comprise entre 0,2 et 1 fois la longueur de l'organe de perturbation.

De manière préférée, l'organe de perturbation est monté de manière rapportée sur la paroi extérieure.

Selon un aspect, la paroi extérieure comporte une ouverture de montage traversante qui est positionnée en amont de l'ouverture de ventilation. L'organe de perturbation s'étend à travers l'ouverture de montage traversante, de préférence, depuis l'intérieur de la cavité intérieure.

Selon un aspect qui n'est pas couvert par les revendications, l'organe de perturbation est un organe de déflection qui comporte une surface extérieure bombée, de préférence, avec un profil ayant une portion elliptique. Cela permet avantageusement à l'air extérieur d'être dévié pour ne pas interagir à grande vitesse avec l'ouverture de ventilation.

Selon l'invention, l'organe de perturbation est un organe de génération de vortex. La formation de vortex, c'est-à-dire des structures aérodynamiques turbulentes, permet d'éviter la formation d'ondes acoustiques. En particulier, les nuisances acoustiques sont faibles lorsque les dimensions des structures aérodynamiques turbulentes sont éloignées de celles d'une ouverture de ventilation.

L'organe de génération de vortex est polyédrique, de préférence, tétraédrique ou pyramidale.

De préférence, l'organe de génération de vortex possède une forme convexe.

De préférence, l'organe de génération de vortex comporte une pluralité d'arrêtes saillantes.

L'invention conformément à la revendication 1 concerne une entrée d'air d'une nacelle de turboréacteur d'aéronef s'étendant selon un axe X dans lequel circule un flux d'air d'amont vers l'aval, l'entrée d'air s'étendant de manière circonférentielle autour de l'axe X et comportant une paroi intérieure tournée vers l'axe X pour guider un flux d'air intérieur INT et une paroi extérieure, qui est opposée à la paroi intérieure, pour guider un flux d'air extérieur EXT, les parois étant reliées par un bord d'attaque et une cloison interne de manière à délimiter une cavité annulaire, l'entrée d'air comportant des moyens d'injection d'au moins un flux d'air chaud FAC dans la cavité intérieure et au moins une ouverture de ventilation formée dans la paroi extérieure pour permettre l'échappement du flux d'air chaud FAC après chauffage de la cavité intérieure.

L'invention est remarquable en ce que l'ouverture de ventilation comporte un bord amont dont le profil circonférentiel est discontinu pour générer des turbulences et/ou un bord aval dont le profil radial est aérodynamique pour limiter la formation de fluctuations de pression.

De manière avantageuse, les structures aérodynamiques turbulentes formées par le bord amont permettent de ne pas interagir avec l'ouverture de ventilation afin de ne pas générer des ondes acoustiques. De manière avantageuse, le profil radial aérodynamique du bord aval permet de modifier l'écoulement du flux d'air extérieur afin d'éviter tout phénomène de sifflement.

Selon un aspect, le profil circonférentiel du bord amont possède au moins un point de discontinuité de courbure au voisinage duquel la direction de la tangente du profil est modifiée d'un angle supérieur à 60°, de préférence, inférieur à 180°.

De préférence, le bord amont comporte entre 1 et 8 points de discontinuité de courbure pour la génération de turbulences.

De préférence, le bord amont comporte au moins deux motifs de génération de turbulences, de préférence, au moins quatre.

De manière préférée, le motif de génération de turbulences possède une forme de feston ou de chevron.

Selon un aspect, le bord amont est inscrit dans les lignes aérodynamiques de la paroi extérieure.

Selon un autre aspect, le bord amont comporte une portion en saillie vers l'extérieur.

De préférence, la portion en saillie forme un angle avec le plan global de l'ouverture de ventilation qui est inférieur à 45°.

De manière préférée, le bord aval possède un profil radial arrondi, de préférence, bombé.

Selon un aspect, l'ouverture de ventilation définit une ligne aérodynamique dans le prolongement de la surface extérieure de la paroi extérieure de l'entrée d'air. Le bord aval est positionné intérieurement à la ligne aérodynamique.

Selon un aspect, la paroi extérieure comportant une ouverture d'assemblage traversante, l'ouverture de ventilation est formée dans un organe de ventilation monté dans l'ouverture d'assemblage traversante, de préférence, depuis l'intérieur.

L'invention conformément à la revendication 1 concerne une entrée d'air d'une nacelle de turboréacteur d'aéronef s'étendant selon un axe X dans lequel circule un flux d'air d'amont vers l'aval, l'entrée d'air s'étendant de manière circonférentielle autour de l'axe X et comportant une paroi intérieure tournée vers l'axe X pour guider un flux d'air intérieur INT et une paroi extérieure, qui est opposée à la paroi intérieure, pour guider un flux d'air extérieur EXT, les parois étant reliées par un bord d'attaque et une cloison interne de manière à délimiter une cavité annulaire, l'entrée d'air comportant des moyens d'injection d'au moins un flux d'air chaud FAC dans la cavité intérieure et au moins une ouverture de ventilation formée dans la paroi extérieure pour permettre l'échappement du flux d'air chaud FAC après chauffage de la cavité intérieure.

L'invention est remarquable en ce qu'elle comprend au moins un organe acoustique positionné dans la cavité intérieure en regard de l'ouverture de ventilation de manière à modifier les fréquences de résonnance acoustique et/ou atténuer les ondes acoustiques formées dans la cavité intérieure via l'ouverture de ventilation.

Un tel organe acoustique permet de modifier les fréquences de résonance ou atténuer les ondes acoustiques de manière à limiter les nuisances acoustiques susceptibles de gêner les riverains. Les effets des nuisances acoustiques sont ainsi réduits.

De préférence, l'ouverture de ventilation comportant un axe normal, l'organe acoustique comporte au moins une surface acoustique s'étendant sensiblement orthogonalement à la normale de l'ouverture de ventilation.

De manière préférée, la projection la surface acoustique dans le plan de l'ouverture de ventilation selon l'axe normal est plus grande que l'ouverture de ventilation.

Selon un aspect, l'ouverture de ventilation comportant un axe normal, la surface acoustique étant écartée de l'ouverture de ventilation selon l'axe normal d'une distance d'écartement, la distance d'écartement est supérieure à la longueur de l'ouverture de ventilation.

Selon un autre aspect, l'ouverture de ventilation comportant un axe normal, la surface acoustique étant écartée de l'ouverture de ventilation selon l'axe normal d'une distance d'écartement, la distance d'écartement est inférieure à deux fois la longueur de l'ouverture de ventilation.

Selon un aspect, l'organe acoustique comporte au moins un matériau d'absorption pour former une surface acoustique absorbante.

Selon un aspect, l'organe acoustique se présente sous la forme d'une cornière comportant une surface de traitement acoustique et une surface de montage.

Selon un aspect, l'organe acoustique est fixé à la surface intérieure de la paroi extérieure.

Selon un aspect, l'organe acoustique est fixé à la cloison interne de la cavité intérieure.

Selon un aspect, la cloison interne comporte une face amont convexe orientée vers l'ouverture de ventilation.

Selon un aspect, la cloison interne comporte une portion concave s'étendant sensiblement orthogonalement à la normale de l'ouverture de ventilation.

Grâce à l'invention, les sources et les effets des nuisances acoustiques relatives aux ouvertures de ventilation sont traitées de manière alternative ou simultanée afin d'améliorer le confort des utilisateurs situés dans l'aéronef mais également celui des riverains. L'invention permet avantageusement de s'intégrer dans un environnement thermique à haute température (circulation du flux chaud) sans impacter le débit d'évacuation et/ou augmenter la trainée aérodynamique.

L'invention peut être mise en oeuvre de manière pratique pour agir sur les fréquences acoustiques que l'on souhaite modifier.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

La figure 1 est une représentation schématique d'une vue en coupe axiale d'un turboréacteur selon l'art antérieur ;

La figure 2 est une représentation schématique d'une vue en coupe transversale d'une entrée d'air selon l'art antérieur dans laquelle circule un flux d'air chaud pour le dégivrage ;

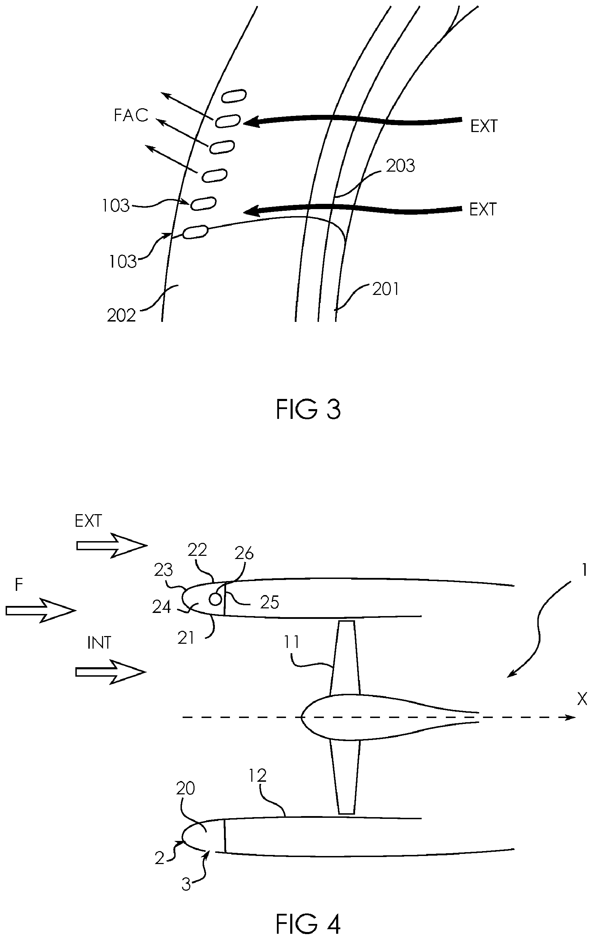

La figure 3 est une représentation schématique en perspective d'une pluralité d'ouvertures de ventilation selon l'art antérieur ;

La figure 4 est une représentation schématique d'une vue en coupe axiale d'un turboréacteur selon l'art antérieur ;

La figure 5 est une représentation schématique en coupe axiale d'une entrée d'air comprenant un organe de perturbation amont ;

La figure 6 est une représentation schématique de dessus d'un organe de perturbation amont associé avec une ouverture de ventilation ;

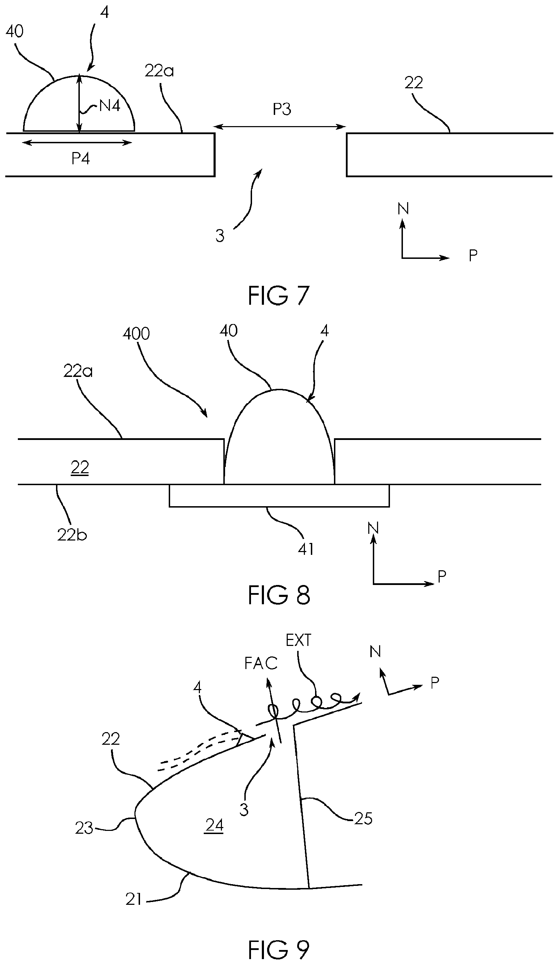

La figure 7 est une représentation schématique rapprochée d'un premier type de montage d'un organe de déflection qui n'est pas couvert par les revendications ;

La figure 8 est une représentation schématique rapprochée d'un deuxième type de montage d'un organe de déflection qui n'est pas couvert par les revendications

La figure 9 est une représentation schématique en coupe axiale d'une entrée d'air comprenant un organe de génération de vortex amont ;

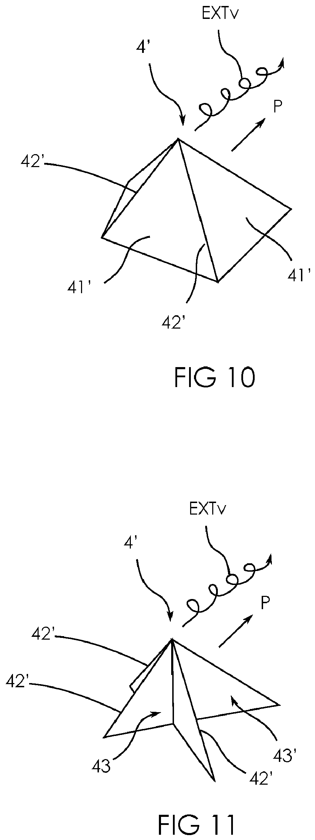

La figure 10 est une représentation schématique en perspective d'une première forme de réalisation d'un organe de génération de vortex amont ;

La figure 11 est une représentation schématique en perspective d'une deuxième forme de réalisation d'un organe de génération de vortex amont ;

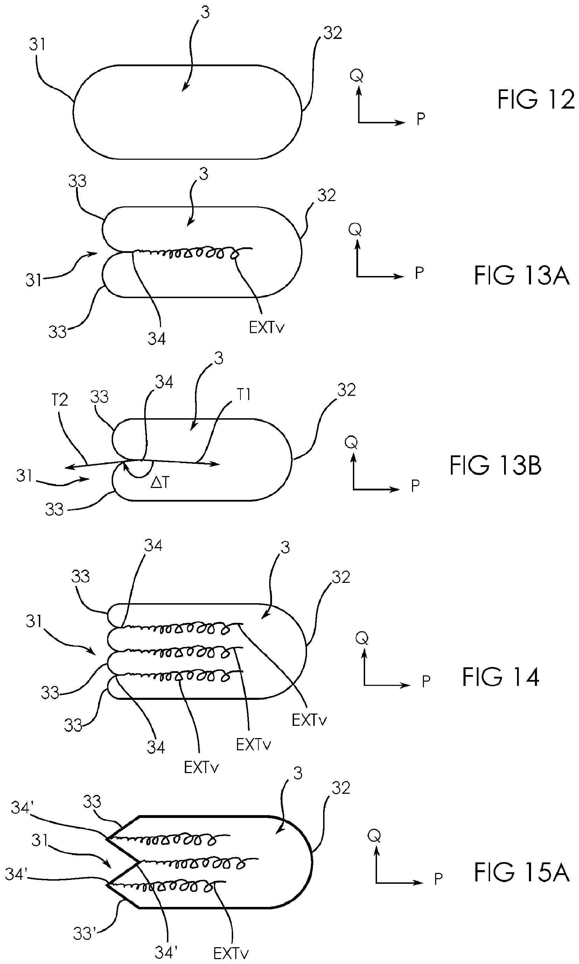

La figure 12 est une représentation schématique de dessus du contour d'une ouverture de ventilation selon l'art antérieur ;

La figure 13A, la figure 13B et la figure 14 sont des représentations schématiques de dessus d'une ouverture de ventilation ayant un bord amont avec des festons ;

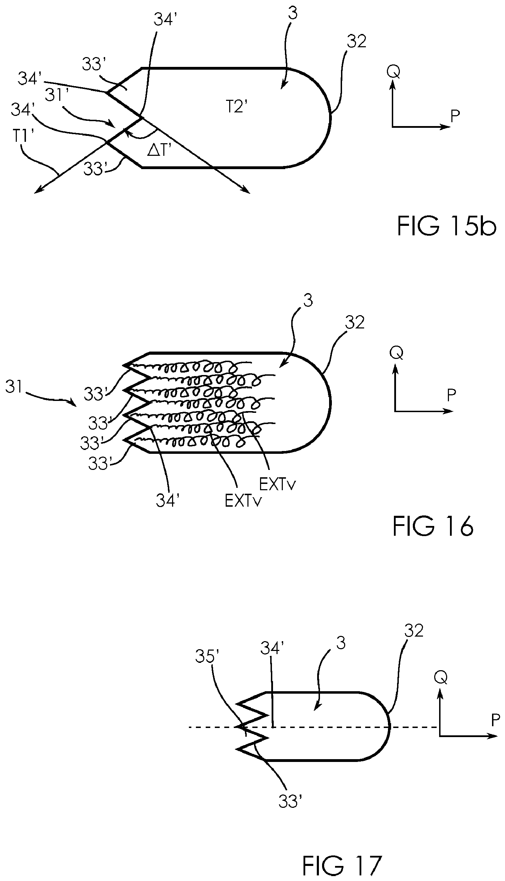

La figure 15A, la figure 15B et la figure 16 sont des représentations schématiques de dessus d'une ouverture de ventilation ayant un bord amont avec des chevrons ;

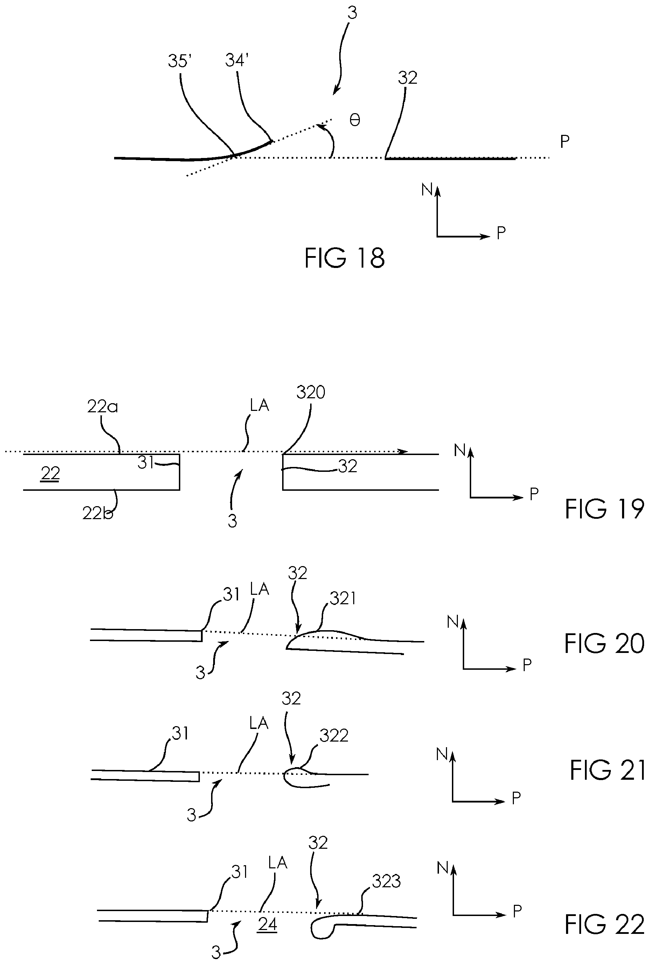

La figure 17 et la figure 18 sont des représentations schématiques de dessus d'une ouverture de ventilation ayant une portion amont en relief ;

La figure 19 est une représentation schématique en coupe longitudinale d'une ouverture de ventilation selon l'art antérieur ;

Les figures 20-23 sont des représentations schématiques en coupe longitudinale d'ouvertures de ventilation selon l'invention avec un bord aval ayant un profil radial aérodynamique ;

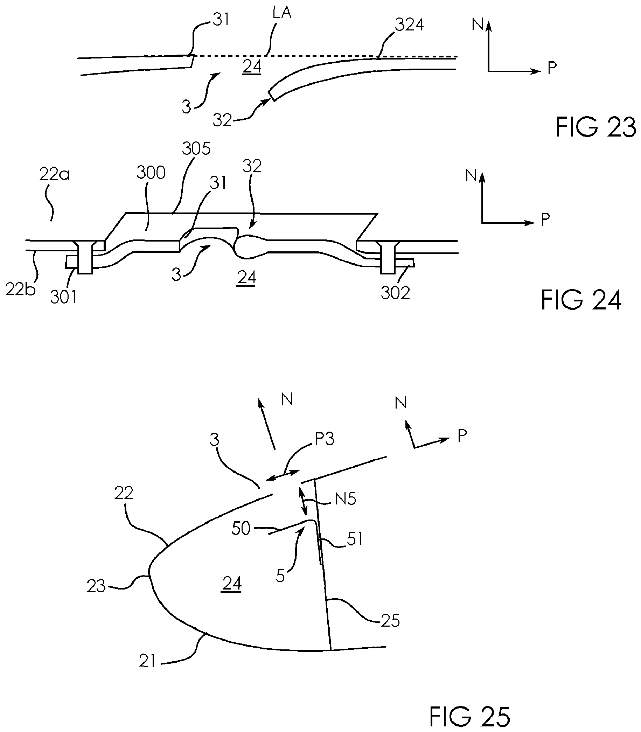

La figure 24 est une représentation schématique en coupe partielle d'un organe de ventilation monté de manière rapportée dans une ouverture d'assemblage traversante ;

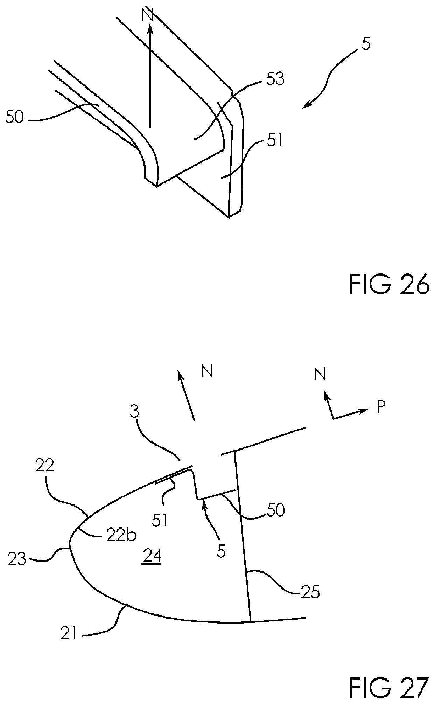

La figure 25 et la figure 26 sont des représentations schématiques d'un organe acoustique monté dans la cavité intérieure sur la cloison interne ;

La figure 27 est une représentation schématique d'un organe acoustique monté dans la cavité intérieure sur la paroi externe ;

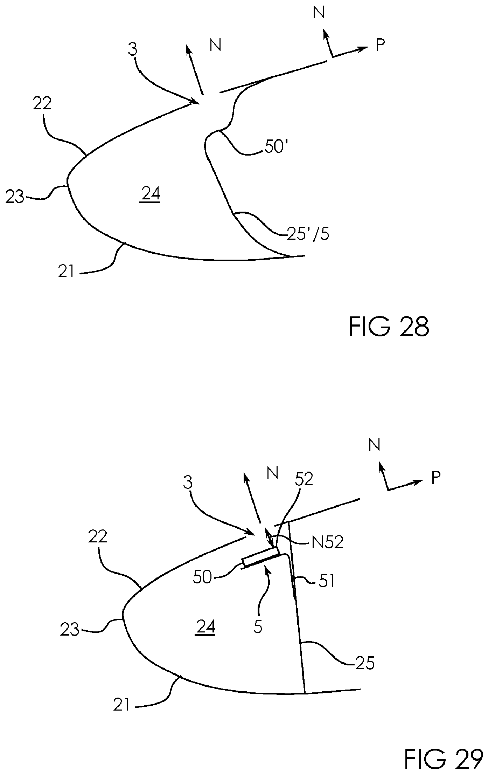

La figure 28 est une représentation schématique d'un organe acoustique intégré à la cloison interne ;

Les figures 29-31 sont des représentations schématiques d'un organe acoustique comportant un matériau d'absorption.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

L'invention va être présentée en référence à la figure 4 présentant un turboréacteur 1 s'étendant selon un axe X et comportant une soufflante 11 montée rotative autour de l'axe X dans une nacelle 2 comportant une virole extérieure 12 afin d'accélérer un flux d'air F d'amont vers l'aval. Par la suite, les termes amont et aval sont définis par rapport à la circulation du flux d'air F. La nacelle 2 comporte à son extrémité amont une entrée d'air 2 comportant une paroi intérieure 21 tournée vers l'axe X et une paroi extérieure 22 qui est opposée à la paroi intérieure 21, les parois 21, 22 sont reliées par un bord d'attaque 23 également appelé « lèvre de l'entrée d'air ». Ainsi, l'entrée d'air 2 permet de séparer le flux d'air entrant F en un flux d'air intérieur INT guidé par la paroi intérieure 21 et un flux d'air extérieur EXT guidé par la paroi extérieure 22. Les parois 21, 22 sont reliées par le bord d'attaque 23 et une cloison interne 25 de manière à délimiter une cavité annulaire 24 connue de l'homme du métier sous la désignation de « D-DUCT ». Par la suite, les termes intérieur et extérieur sont définis radialement par rapport à l'axe X du turboréacteur 1.

L'entrée d'air 2 comporte un dispositif de dégivrage comportant des moyens d'injection 26 d'un flux d'air chaud FAC dans la cavité intérieure 24, par exemple, un injecteur. La circulation d'un tel flux d'air chaud FAC permet, par échange thermique, de chauffer la paroi intérieure 201, la paroi extérieure 202 et la lèvre 203 et ainsi éviter l'accumulation de givre qui fond ou s'évapore au fur et à mesure de son accumulation. Comme illustré à la figure 4, la cavité intérieure 24 comporte une ou plusieurs ouvertures de ventilation 3 formées dans la paroi extérieure 22 de l'entrée d'air 2 de manière à permettre l'évacuation du flux d'air chaud FAC après chauffage de la cavité intérieure 24. En pratique, les ouvertures de ventilation 3 sont placées en amont de l'injecteur 26 par rapport au point d'injection du flux d'air chaud FAC dans l'entrée d'air 2, le terme amont étant défini dans cette phrase par rapport à la circulation circonférentielle du flux d'air chaud d'amont en aval dans l'entrée d'air 2 circonférentielle.

Selon un aspect de l'invention, en référence aux figures 5 et 6, l'entrée d'air 2 comporte au moins un organe de perturbation 4 du flux d'air extérieur EXT, positionné en amont d'une ouverture de ventilation 3, qui s'étend en saillie vers l'extérieur depuis la paroi extérieure 22. Autrement dit, l'organe de perturbation 4 permet d'agir sur l'excitation à l'origine des nuisances acoustiques en réduisant son influence.

Par la suite, l'invention est présentée dans un repère orthogonal P, Q, N dans lequel l'axe P s'étend selon la paroi extérieure d'amont vers l'aval, l'axe N s'étend normalement à l'ouverture de ventilation 3 de l'intérieur vers l'extérieur et l'axe Q s'étend tangentiellement.

L'ouverture de ventilation 3 est définie dans le repère orthogonal P, Q, N. A cet effet, l'ouverture de ventilation 3 comporte une longueur P3 définie selon l'axe P et une largeur Q3 définie selon l'axe Q comme illustré à la figure 6.

Afin de pouvoir agir de manière optimale sur le flux d'air extérieur amont EXT, c'est-à-dire l'excitation acoustique, l'organe de perturbation 4 possède une largeur Q4 au moins égale à la moitié la largeur Q3 de l'ouverture de ventilation 3, de préférence, à la largeur Q3 de l'ouverture de ventilation 3 comme illustré à la figure 6. De préférence, les largeurs Q3, Q4 sont du même ordre de grandeur pour limiter les perturbations aérodynamiques. De même, la distance ΔP, définie selon l'axe P, entre l'organe de perturbation 4 et l'ouverture de ventilation 3 est comprise entre 0,5 et 3 fois la longueur P4 de l'organe de perturbation 4. De préférence, la distance ΔP est inférieure à 2 fois la longueur P3 de l'ouverture de ventilation 3. Cela permet avantageusement au flux d'air extérieur EXT d'être perturbé préalablement avec son interaction avec l'ouverture de ventilation 3 tout en limitant la trainée.

[Math. 1]

$$0,5 * P4 \leq \Delta P \leq 3 * P4$$

[Math. 2]

$$\Delta P \leq 2 * P3$$

De préférence encore, comme illustré à la figure 7, l'organe de perturbation 4 possède une hauteur N4, définie selon l'axe N, comprise entre 0,2 et 1 la longueur P4 de l'organe de perturbation 4. Une telle hauteur restreinte permet d'éviter une interaction acoustique du flux d'air extérieur EXT avec l'ouverture de ventilation 3 tout en limitant les perturbations aérodynamiques.

Selon un aspect de l'invention, en référence à la figure 7, l'organe de perturbation 4 est issu de matière de la paroi extérieure 22 ou fixé de manière rapportée à sa surface extérieure 22a, par exemple, par collage, soudage ou analogue. Selon un autre aspect de l'invention, en référence à la figure 8, la paroi extérieure 22 comporte une ouverture de montage traversante 400, positionnée en amont de l'ouverture de ventilation 3. L'organe de perturbation 4 s'étend à travers l'ouverture de montage traversante 400 de manière à s'étendre en saillie vers l'extérieur depuis la paroi extérieure 22. Dans l'exemple de la figure 8, l'organe de perturbation 4 comporte une base de montage 41 configurée pour être fixée à la surface intérieure 22b de la paroi extérieure 22, en particulier, par collage soudage, rivetage ou analogue. Autrement dit, l'organe de perturbation 4 peut être monté depuis l'extérieur (Figure 7) mais également depuis l'intérieur (Figure 8) en fonction des contraintes de montage et d'encombrement.

Deux formes de réalisation d'un organe de perturbation 4 vont dorénavant être présentées en détails.

Dans une première forme de réalisation, qui n'est pas couverte par les revendications, en référence aux figures 5 à 8, l'organe de perturbation est un organe de déflection configuré pour dévier le flux d'air extérieur EXT afin d'éviter que celui-ci de possède une incidence rasante lors de son interaction avec l'ouverture de ventilation 3. La formation de fluctuations de pression acoustique au voisinage de l'ouverture de ventilation 3 est évitée, ce qui réduit les nuisances acoustiques.

De manière préférée, l'organe de déflection comporte une surface extérieure 40 qui est bombée. Cela permet avantageusement d'éviter un décollement trop important de l'écoulement du flux d'air extérieur modifié EXTm. De préférence, la surface extérieure 40 possède une portion de profil elliptique, c'est-à-dire, s'inscrivant dans un contour elliptique selon un plan de coupe axiale (N, P) comme illustré aux figures 5, 7 et 8. Une telle surface extérieure 40 permet de modifier les lignes de courant sans engendrer une augmentation de traînée significative. L'écoulement dynamique demeure peu perturbé et est simplement dévié.

Dans une deuxième forme de réalisation, en référence aux figures 9 à 11, l'organe de perturbation est un organe de génération de vortex 4' afin de créer des perturbations aérodynamiques. Les vortex sont des structures aérodynamiques présentant un caractère turbulent, ce qui permet d'éviter la génération de fluctuations de pressions acoustiques due à l'interaction entre le flux extérieur EXT et l'ouverture de ventilation 3.

Les dimensions géométriques présentées préalablement pour l'organe de perturbation s'appliquent pour l'organe de déflection et l'organe de génération de vortex. Elles ne seront pas détaillées de nouveau.

Comme illustré aux figures 9 à 11, l'organe de génération de vortex 4' est polyédrique, de préférence, tétraédrique (base triangle) ou pyramidale (base carré). La présence de faces et/ou d'arrêtes permet de générer des vortex EXTv comme illustré à la figure 9 dans le flux d'air extérieur EXT selon une pluralité de directions différentes afin de générer un flux d'air extérieur avec des perturbations aérodynamiques.

Selon un premier aspect, en référence à la figure 10, l'organe de génération de vortex 4' possède une forme convexe, de préférence pleine, de manière à définir plusieurs faces de déviation 41' qui sont reliées par des arêtes saillantes 42'. Selon un deuxième aspect, en référence à la figure 11, l'organe de génération de vortex 4' comporte une pluralité d'arrêtes saillantes 42' qui sont reliées par des portions concaves 43' de manière à perturber de manière importante le flux d'air extérieur EXT.

Il a été présenté une réduction des nuisances acoustiques pour une unique ouverture de ventilation 3 mais il va de soi que quelques-unes ou l'ensemble des ouvertures de ventilation 3 pourraient être associées à des organes de perturbation 4, 4' du flux d'air extérieur de natures identiques ou différentes.

Lorsque plusieurs organes de perturbation 4, 4' sont utilisés ensemble, ceux-ci peuvent être indépendants ou reliés ensemble, par exemple, de manière continue entre deux ouvertures de ventilation 3 adjacentes.

De manière avantageuse, de tels organes de perturbation 4, 4' permettent d'agir à l'origine des nuisances acoustiques, c'est-à-dire, sur le flux d'air extérieur EXT situé en amont de l'ouverture de ventilation 3 de manière à réduire la génération de fluctuations de pressions acoustiques.

De manière classique, en référence à la figure 12 représentant une ouverture de ventilation 3 selon l'art antérieur, l'ouverture de ventilation 3 possède une forme oblongue dont la longueur est définie selon l'axe P s'étendant de l'amont vers l'aval. Le bord amont 31 et le bord aval 32 possèdent une forme curviligne de manière à limiter les fatigues mécaniques.

Selon un aspect de l'invention, en référence aux figures 12 à 18, l'ouverture de ventilation 3 comporte un bord amont 31 dont le profil circonférentiel est discontinu pour générer des turbulences et/ou un bord aval 32 dont le profil radial est aérodynamique pour limiter la formation de fluctuations de pression. Autrement dit, le profil du bord de l'ouverture de ventilation 3 est modifié de manière à limiter les perturbations acoustiques. Un bord amont irrégulier 31 permet de relâcher des structures aérodynamiques turbulentes de faibles dimensions qui n'engendrent pas de nuisances acoustiques avec l'ouverture de ventilation 3.

D'une part, comme cela sera présenté par la suite, le bord amont 31 peut comporter un profil circonférentiel discontinu pour générer des turbulences et ainsi perturber le flux d'air extérieur amont à la manière d'un organe de perturbation amont tel que présenté précédemment. Autrement dit, le bord amont forme un organe de perturbation intégré à l'ouverture de ventilation 3. Ainsi, l'interaction avec l'ouverture de ventilation 3 est maitrisée.

D'autre part, comme cela sera présenté par la suite, le bord aval 32 peut comporter un profil aérodynamique selon la direction radiale pour limiter la formation de fluctuations de pressions. De manière avantageuse, cela permet d'éviter l'apparition de sifflements. Ainsi, des traitements antagonistes des bords opposés 31, 32 d'une ouverture de ventilation 3, de manière alternative ou cumulative, permettent de contrer la génération de nuisances acoustiques.

De manière préférée, l'ouverture de ventilation 3 possède un rapport de longueur, définie selon l'axe P, sur largeur, définie selon l'axe Q, qui est compris entre 2 et 5.

Selon un aspect de l'invention, le profil du bord amont 31 dans la direction circonférentielle possède au moins un point de discontinuité de courbure 34 au voisinage duquel la tangente est modifiée d'un angle $\Delta T$ supérieur à 60°, de préférence, inférieur à 180°. De préférence, le bord amont 31 comporte au moins deux motifs de génération de turbulences 33, de préférence, au moins quatre. De préférence, les motifs de génération de turbulences 33 sont adjacents les uns aux autres. Le profil circonférentiel est défini dans le plan (P, Q).

Comme illustré aux figures 13A et 13B, il est représenté un bord amont 31 comprenant deux motifs de génération de turbulences 33 en forme de feston de manière à définir à leur interface un point de discontinuité de courbure 34 qui s'étend en saillie vers le centre de l'ouverture de ventilation 3. La figure 13B illustre la tangente T1 du premier motif de génération de turbulences 33 et la tangente T2 du deuxième motif de génération de turbulences 33 qui sont écartées d'un angle $\Delta T$ compris entre 160° et 180°. Un tel point de discontinuité 34 permet de perturber l'écoulement du flux d'air extérieur EXT avant qu'il interagisse avec le bord aval 32.

Selon une autre forme de réalisation illustrée à la figure 14, le bord amont 31 comprend quatre motifs de génération de turbulences 33 en forme de feston et trois points de discontinuité de courbure 34 qui s'étendent en saillie vers le centre de l'ouverture de ventilation 3 afin de générer un grand nombre de perturbations aérodynamiques.

De même, selon une autre forme de réalisation illustrée aux figures 15A et 15B, il est représenté un bord amont 31 comprenant deux motifs de génération de turbulences 33' en forme de chevron de manière à définir un point de discontinuité de courbure interne 34' et un point de discontinuité de courbure 34' à l'interface avec un autre motif de génération 33'. Aussi, dans cet exemple, le bord amont 31 comprend 3 points de discontinuité de courbure 34' dont 1 qui s'étend en saillie vers le centre de l'ouverture de ventilation 3 et dont 2 s'étendent en saillie de manière opposée afin de générer un grand nombre de perturbations aérodynamiques. De manière analogue à la figure 13B, la figure 15B illustre la tangente T1' du premier motif de génération de turbulences 33' et la tangente T2' du deuxième motif de génération de turbulences 33' qui sont écartées d'un angle $\Delta T'$ compris entre 90° et 110°.

En référence à la figure 16, le bord amont 31 comprend quatre motifs de génération de turbulences 33' en forme de chevron et 7 points de discontinuité de courbure 34' dont 3 qui s'étendent en saillie vers le centre de l'ouverture de ventilation 3 et dont 4 s'étendent en saillie de manière opposée afin de générer un grand nombre de perturbations aérodynamiques.

Il va de soi que le nombre et la forme de motifs de génération de turbulences 33, 33' ainsi que le nombre, la forme et la position des points de discontinuité de courbure 34, 34' peut varier en fonction des besoins. De manière préférée, le bord amont 31 comporte entre 1 et 8 points de discontinuité de courbure 34, 34' pour la génération de vortex en fonction de l'effet acoustique souhaité.

Selon un aspect de l'invention, le bord amont 31 est inscrit dans les lignes aérodynamiques et appartient au plan (P, Q), c'est-à-dire, selon une ligne aérodynamique. Un tel bord amont 31 est simple à réaliser. Selon un autre aspect, le bord amont 31 comporte une portion en saillie 35' vers l'extérieur. A titre d'exemple, comme illustré aux figures 17 et 18 représentant un bord amont 31 comportant des motifs de génération de turbulences 33' en forme de chevrons, un point de discontinuité de courbure 34' s'étend en saillie vers le centre de l'ouverture de ventilation 3 et s'étend en saillie vers l'extérieur, c'est-à-dire, au-dessus du plan (P, Q) dans lequel s'étend l'ouverture de ventilation 3. Autrement dit, le point de discontinuité de courbure 34' permet de générer des turbulences à la manière d'un organe de perturbation amont 4, 4' tel que présenté précédemment en modifiant l'incidence du flux d'air extérieur EXT en amont de l'ouverture de ventilation 3. De manière préférée, la portion en saillie 35' forme un angle θ avec le plan global (P, Q) de l'ouverture de ventilation 3 qui est inférieur à 45°.

De manière avantageuse, le profil du bord amont 31 est réalisé par découpe mécanique, par jet d'eau, par laser ou par poinçonnement.

De manière classique, en référence à la figure 19 représentant une ouverture de ventilation 3 selon l'art antérieur, l'ouverture de ventilation 3 comporte un bord aval 32 présentant une arête saillante 320 dans le plan (P, Q) de l'ouverture de ventilation 3, c'est-à-dire, à l'interface avec le flux d'air extérieur EXT qui balaye la paroi extérieure 22. Cette ligne interface, désignée par la suite « ligne aérodynamique LA », interagit avec l'arête saillante 320 du bord aval 32 et génère des sifflements et autre nuisances acoustiques.

Selon un aspect de l'invention, comme illustré aux figures 20 à 24, le bord aval 32 possède un profil aérodynamique dans la direction radiale pour limiter la formation de fluctuations de pressions, c'est-à-dire, éviter tout cisaillement de la ligne aérodynamique LA par une arête saillante. Le profil radial est défini dans le plan (P, N).

De manière préférée, l'épaisseur du bord aval 32 est différente de celle du bord amont 31. De préférence, l'épaisseur du bord aval 32 est épaissie par rapport au bord amont de manière à former un profil radial aérodynamique. Le profil radial aérodynamique possède de manière avantageuse une courbure continue, dénuée de discontinuité, en particulier, vis à vis de la ligne aérodynamique LA. Le profil radial aérodynamique permet avantageusement une déviation progressive.

Comme illustré à la figure 20, le bord aval 32 possède un profil supérieur aérodynamique 321 au niveau de la ligne aérodynamique LA, en particulièrement, arrondi ou bombé. Dans cette forme de réalisation, seule la partie supérieure du bord aval 32 est modifiée.

En référence à la figure 21, il est proposé de former un bord aval 32 entièrement arrondi ou bombé de manière à guider sans turbulence la ligne aérodynamique LA aussi bien intérieurement ou extérieurement à cette dernière. Comme illustré aux figures 22 et 23, le bord aval 32 est incliné vers l'intérieur de la cavité intérieure 24 de manière à éviter un contact entre le flux d'air extérieur EXT et une arrête saillante. En référence à la figure 22, le bord aval 32 est déformé, en particulier, avec une excroissance orientée vers l'intérieur. En référence à la figure 23, le bord aval 32 est déformé vers l'intérieur de manière à se situer sous la ligne aérodynamique LA. de manière préférée, le profil radial du bord aval 32 peut être réalisé par déformation locale de la matière.

Selon un aspect de l'invention, en référence à la figure 24, la paroi extérieure 22 comporte une ouverture d'assemblage traversante 305 et l'ouverture de ventilation 3 est formée dans un organe de ventilation 300 monté dans l'ouverture d'assemblage traversante 305, de préférence, depuis l'intérieur. Une telle forme de réalisation est avantageuse étant donné qu'elle permet de former une ouverture d'assemblage traversante 305 de forme simple, sans contraintes aérodynamiques particulières dans la paroi extérieure 22. Chaque organe de ventilation 300 peut être fabriqué de manière indépendante et comporter avantageusement des bords amont 31 et aval 32 qui sont travaillés afin de réduire les perturbations acoustiques. Chaque organe de ventilation 300 peut ensuite être fixé de manière rapportée à une ouverture d'assemblage traversante 305, en particulier, au niveau de son extrémité amont 301 et de son extrémité aval 302 comme illustré à la figure 24. Une telle forme de réalisation allie des performances acoustiques améliorées et des facilités d'industrialisation.

La modification d'un bord amont 31 et/ou d'un bord aval 32 d'une ouverture de ventilation 3 permet de former une ouverture de ventilation 3 dont l'impact acoustique est réduit.

Il a été présenté une réduction des nuisances acoustiques pour une unique ouverture de ventilation 3 mais il va de soi que quelques-unes ou l'ensemble des ouvertures de ventilation 3 pourraient comprendre un bord amont 31 et/ou aval 32 modifié selon l'invention.

Selon un aspect de l'invention, en référence aux figures 25 à 31, l'entrée d'air 2 comporte au moins un organe acoustique 5 monté dans la cavité intérieure 24 en regard de l'ouverture de ventilation 3. Par en regard de l'ouverture de ventilation, on entend que l'organe acoustique 5 est distant de l'ouverture de ventilation 3 afin de ne pas perturber l'échappement du flux d'air chaud FAC mais aligné avec ce dernier pour permettre le traitement des ondes acoustiques issues de ladite ouverture de ventilation 3.

Ainsi, contrairement à un traitement de l'excitation acoustique comme enseigné dans la première partie, il est ici proposé de traiter la résonance acoustique en tant que telle en déplaçant les fréquences en dehors des zones de résonance voire en atténuant les ondes acoustiques. L'amplification sonore des nuisances acoustiques est avantageusement réduite.

Comme illustré aux figures 25 et 26, selon une première forme de réalisation, l'organe acoustique 5 comporte une surface acoustique 50 s'étendant en regard de l'ouverture de ventilation 3. La surface acoustique 50 est ici sensiblement plane pour améliorer son efficacité mais elle pourrait également être courbée. De manière avantageuse, la surface acoustique 50 est réfléchissante au sens acoustique de manière à modifier les longueurs d'ondes acoustiques et ainsi réduire les résonances. De préférence, la surface de traitement 50 est réalisée dans un matériau métallique ou céramique afin de posséder une bonne tenue aux hautes températures.

Comme illustré à la figure 25, l'ouverture de ventilation 3 comporte un axe normal N et la projection de l'organe acoustique 5, la surface acoustique 50, dans le plan (P, Q) de l'ouverture de ventilation 3 selon l'axe normal N est plus grande que l'ouverture de ventilation 3 afin de permettre de contenir l'ensemble des ondes acoustiques entrant par l'ouverture de ventilation 3. De préférence, la surface acoustique 50 est sensiblement parallèle au plan (P, Q) de l'ouverture de ventilation 3. Autrement dit, la surface acoustique 50 s'étend sensiblement orthogonalement à la normale N de l'ouverture de ventilation 3. Selon un aspect préféré, comme illustré à la figure 26, la surface acoustique 50 comprend à son extrémité circonférentielle un bord incurvé 53 de manière à permettre en outre de guider l'échappement du flux d'air chaud FAC vers l'ouverture de ventilation 3.

Afin d'obtenir des performances acoustiques optimales, en référence à la figure 25, l'organe acoustique 5 est écarté de l'ouverture de ventilation 3 selon l'axe normal d'une distance d'écartement N5 qui est, de préférence, inférieure à 20mm. Cela permet d'assurer un échappement d'air chaud optimal ainsi qu'un déplacement des fréquences acoustiques dans un domaine fréquentiel moins gênant pour l'oreille humaine.

Dans la forme de réalisation des figures 25 et 26, l'organe acoustique 5 se présente sous la forme d'une cornière définissant une surface acoustique 50 et une surface de montage 51. De préférence, la cornière possède une section en forme de L. Une telle structure simple permet de permettre une efficacité acoustique sans augmenter la masse de manière importante. Comme illustré à la figure 25, l'organe acoustique 5 peut être fixé, via sa surface de montage 51, à la cloison interne 25 de la cavité intérieure 24 (Figure 25) ou à la surface intérieure 22b de la paroi extérieure 22 (Figure 27) de manière à ce que la surface acoustique 50 s'étende au voisinage immédiat de l'ouverture de ventilation 3.

Selon un autre aspect de l'invention, en référence à la figure 28, la cloison interne 25' forme l'organe acoustique 5, cela permet avantageusement d'éviter l'ajout d'un organe rapporté. De manière préférée, la face amont de la cloison interne 25' comporte une portion concave 50' ou méplat s'étendant sensiblement orthogonalement à la normale N de l'ouverture de ventilation 3 de manière à former une surface acoustique réfléchissante des ondes entrant par l'ouverture de ventilation 3. Ainsi, on tire avantage de la cloison interne 25' pour traiter les ondes acoustiques sans augmenter la masse de l'entrée d'air 20. De préférence, la face amont de la cloison interne 25' est globalement convexe et elle est déformée localement pour former la portion concave 50' de surface acoustique.

En référence aux figures 29 à 31, selon un aspect de l'invention, l'organe acoustique 5 comporte au moins un matériau d'absorption 52 de manière à former une surface acoustique absorbante. De préférence, le matériau absorbant 52 est résistant aux hautes températures, par exemple de l'ordre de 350°C, qui correspond à l'ordre de grandeur de la température du flux d'air chaud FAC utilisé pour le dégivrage.

A titre d'exemple, le matériau d'absorption 52 est du type poreux avec ou sans nid d'abeille, en particulier, métallique. Il va de soi que d'autres matériaux pourraient convenir, par exemple, une mousse métallique, un matériau céramique avec une peau perforée et analogues.

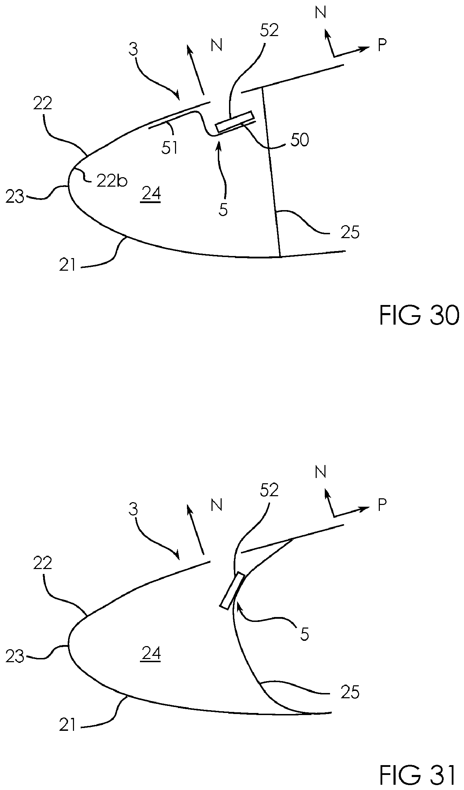

Comme illustré aux figures 29 et 30, un matériau d'absorption 52 est positionné sur la surface acoustique 50 des formes de réalisation des figures 25 et 27 afin de réduire de manière importantes les nuisances acoustiques. Dans un tel cas, la surface 50 est commune et ne possède qu'une fonction de support, le matériau d'absorption 52 réalisant le traitement acoustique par absorption.

Dans cette forme de réalisation, le matériau d'absorption 52 est écarté de l'ouverture de ventilation 3 selon l'axe normal d'une distance d'écartement N52 qui est supérieure à la longueur P3 de l'ouverture de ventilation 3. De préférence encore, la distance d'écartement N52 est inférieure à deux fois la longueur P3 de l'ouverture de ventilation 3. Un tel compromis permet d'assurer un échappement d'air chaud optimal ainsi qu'une absorption acoustique optimale.

En référence à la figure 31, la cloison interne 25 comporte une face amont convexe orientée vers l'ouverture de ventilation 3 et le matériau d'absorption 52 est fixé directement à la cloison interne 25 en regard de l'ouverture de ventilation 3. Autrement dit, l'organe acoustique 5 est formé par la cloison 25 sur laquelle est fixé le matériau d'absorption 52.

Grâce à l'invention, les ondes acoustiques sont traitées de manière interne à la cavité intérieure 24, ce qui permet de ne pas impacter l'encombrement de l'entrée d'air 2 ainsi que la paroi extérieure 22. L'organe acoustique permet d'écarter les fréquences acoustiques des domaines de sensibilité de l'oreille humaine susceptibles d'engendrer des nuisances acoustiques.

Il a été présenté une réduction des nuisances acoustiques pour une unique ouverture de ventilation 3 mais il va de soi que quelques-unes ou l'ensemble des ouvertures de ventilation 3 pourraient être associées à des organes acoustiques 5. Lorsque plusieurs organes acoustiques 5 sont utilisés ensemble, ceux-ci peuvent être indépendants ou reliés ensemble, par exemple, de manière continue entre deux ouvertures de ventilation 3 adjacentes.

De manière avantageuse, les différents aspects de l'invention peuvent être combinés entre eux pour une même ouverture de ventilation ou pour des ouvertures de ventilations différentes.

Aussi, un organe de perturbation, déflection ou génération de vortex, peut avantageusement être associé à une ouverture de ventilation 3 ayant un bord amont 31 dont le profil circonférentiel est discontinu pour générer des turbulences et/ou un bord aval 32 dont le profil radial est aérodynamique pour limiter la fluctuation de pression.

De même, un organe de perturbation, déflection ou génération de vortex, peut avantageusement être associé à un organe acoustique, avec ou sans matériau d'absorption.

De même, un organe acoustique, avec ou sans matériau d'absorption. peut avantageusement être associé avec une ouverture de ventilation 3 ayant un bord amont 31 dont le profil circonférentiel est discontinu pour générer des turbulences et/ou un bord aval 32 dont le profil radial est aérodynamique pour limiter la formation de fluctuations de pression.

Selon un aspect de l'invention, un organe acoustique, avec ou sans matériau d'absorption. peut avantageusement être associé, de manière cumulative, à une ouverture de ventilation 3 ayant un bord amont 31 dont le profil circonférentiel est discontinu pour générer des turbulences et/ou un bord aval 32 dont le profil radial est aérodynamique pour limiter la formation de fluctuations de pression ainsi qu'à un organe de perturbation, déflection ou génération de vortex.

**Revendications**

1. Entrée d'air (2) d'une nacelle de turboréacteur (1) d'aéronef s'étendant selon un axe X dans lequel circule un flux d'air (F) d'amont vers l'aval, l'entrée d'air (2) s'étendant de manière circonférentielle autour de l'axe X et comportant une paroi intérieure (21) tournée vers l'axe X pour guider un flux d'air intérieur INT et une paroi extérieure (22), qui est opposée à la paroi intérieure (21), pour guider un flux d'air extérieur EXT, les parois (21, 22) étant reliées par un bord d'attaque (23) et une cloison interne (25) de manière à délimiter une cavité annulaire (24), l'entrée d'air (2) comportant des moyens d'injection (26) d'au moins un flux d'air chaud FAC dans la cavité intérieure (24) et au moins une ouverture de ventilation (3) formée dans la paroi extérieure (22) pour permettre l'échappement du flux d'air chaud FAC après chauffage de la cavité intérieure (24), entrée d'air **caractérisée par le fait qu'**elle comporte au moins un organe de perturbation du flux d'air extérieur EXT, positionné en amont de l'ouverture de ventilation (3), qui s'étend en saillie vers l'extérieur depuis la paroi extérieure (22), l'organe de perturbation étant un organe de génération de vortex (4') polyédrique, de préférence, tétraédrique ou pyramidale.

2. Entrée d'air selon la revendication 1, dans laquelle l'organe de perturbation (4, 4') possède une largeur (Q4) au moins égale à la moitié de la largeur (Q3) de l'ouverture de ventilation (3).

3. Entrée d'air selon l'une des revendications 1 à 2, dans laquelle la distance (ΔP) entre l'organe de perturbation (4, 4') et l'ouverture de ventilation (3) est comprise entre 0,5 et 3 fois la longueur (P4) de l'organe de perturbation (4, 4').

4. Entrée d'air selon l'une des revendications 1 à 3, dans laquelle la distance (ΔP) entre l'organe de perturbation (4, 4') et l'ouverture de ventilation (3) est inférieure à 2 fois la longueur (P3) de l'ouverture de ventilation (3).

5. Entrée d'air selon l'une des revendications 1 à 4, dans laquelle l'organe de perturbation (4, 4') possède une hauteur (N4) comprise entre 0,2 et 1 fois la longueur (P4) de l'organe de perturbation (4, 4').

6. Entrée d'air selon l'une des revendications 1 à 5, dans laquelle l'organe de perturbation (4, 4') est monté de manière rapportée sur la paroi extérieure (22).

7. Entrée d'air selon l'une des revendications 1 à 6, dans laquelle, la paroi extérieure (22) comportant une ouverture de montage traversante (400), positionnée en amont de l'ouverture de ventilation (3), l'organe de perturbation (4, 4') s'étend à travers l'ouverture de montage traversante (400), de préférence, depuis l'intérieur de la cavité intérieure (24).

8. Entrée d'air selon l'une des revendications 1 à 7, dans laquelle l'organe de génération de vortex (4') comporte une pluralité d'arrêtes saillantes (42').

**Patentansprüche**

1. Lufteinlass (2) einer Flugzeugtriebwerksgondel (1), der sich in einer Achse X erstreckt, in der ein Luftstrom (F) von vorn nach hinten zirkuliert, wobei sich der Lufteinlass (2) umlaufend um die Achse X erstreckt und eine Innenwand (21), die zur Achse X zeigt, zur Führung eines inneren Luftstroms INT und eine Außenwand (22) gegenüber der Innenwand (21) zur Führung eines äußeren Luftstroms EXT umfasst, wobei die Wände (21, 22) durch eine Vorderkante (23) und eine innere Trennwand (25) derart verbunden sind, dass ein ringförmiger Hohlraum (24) begrenzt ist, wobei der Lufteinlass (2) Mittel zum Einleiten (26) mindestens eines warmen Luftstroms FAC in den inneren Hohlraum (24) und mindestens eine Lüftungsöffnung (3) aufweist, die in der Außenwand (22) ausgebildet ist, um das Entweichen des warmen Luftstroms FAC nach dem Erwärmen des inneren Hohlraums (24) zu gestatten, wobei der Lufteinlass **dadurch gekennzeichnet ist, dass** er mindestens ein Störorgan des äußeren Luftstroms EXT aufweist, das vor der Lüftungsöffnung (3) positioniert ist, das sich nach außen hervorragend ab der Außenwand (22) erstreckt, wobei das Störorgan ein polyedrisches Wirbelerzeugungsorgan (4') ist, vorzugsweise tetraedisches oder pyramidales.

2. Lufteinlass nach Anspruch 1, wobei das Störorgan (4, 4') eine Breite (Q4) besitzt, die mindestens gleich der Hälfte der Breite (Q3) der Lüftungsöffnung (3) ist.

3. Lufteinlass nach einem der Ansprüche 1 bis 2, wobei der Abstand (DR) zwischen dem Störorgan (4, 4') und der Lüftungsöffnung (3) zwischen dem 0,5- und 3-fachen der Länge (P4) des Störorgans (4, 4') liegt.

4. Lufteinlass nach einem der Ansprüche 1 bis 3, wobei der Abstand (DR) zwischen dem Störorgan (4, 4') und der Lüftungsöffnung (3) kleiner als das 2-fache der Länge (P3) der Lüftungsöffnung (3) ist.

5. Lufteinlass nach einem der Ansprüche 1 bis 4, wobei das Störorgan (4, 4') eine Höhe (N4) besitzt, die zwischen dem 0,2- und 1-fachen der Länge (P4) des Störorgans (4, 4') liegt.

6. Lufteinlass nach einem der Ansprüche 1 bis 5, wobei das Störorgan (4, 4') an der Außenwand (22) montiert angebracht ist.

7. Lufteinlass nach einem der Ansprüche 1 bis 6, wobei, wobei die Außenwand (22) eine durchgängige Montageöffnung (400), die vor der Lüftungsöffnung (3) positioniert ist, aufweist, sich das Störorgan (4, 4') durch die durchgängige Montageöffnung (400) erstreckt, vorzugsweise vom Inneren des inneren Hohlraums (24) aus.

8. Lufteinlass nach einem der Ansprüche 1 bis 7, wobei das Wirbelerzeugungsorgan (4') eine Vielzahl hervorstehender Kanten (42') aufweist.

**Claims**

1. An air intake (2) of an aircraft turbojet engine nacelle (1) extending along an axis X in which an air stream (F) circulates from upstream to downstream, the air intake (2) extending circumferentially about axis X and comprising an internal wall (21) pointing to axis X to guide an internal air stream INT and an external wall (22) which is opposite to the internal wall (21), to guide an external air stream EXT, the walls (21, 22) being connected through a leading edge (23) and an internal partition wall (25) so as to delimit an annular cavity (24), the air intake (2) comprising means (26) for injecting at least one hot air stream FAC into the internal cavity (24) and at least one ventilation opening (3) formed in the external wall (22) to allow exhaust of the hot air stream FAC after heating the internal cavity (24), which air intake is **characterized in that** it comprises at least one member for disturbing the external air stream EXT, positioned upstream of the ventilation opening (3), which extends projecting outwardly from the external wall (22), the disturbance member being a polyhedral vortex generating member (4'), preferably tetrahedral or pyramidal.

2. The air intake according to claim 1, wherein the disturbance member (4, 4') has a width (Q4) at least equal to half the width (Q3) of the ventilation opening (3).

3. The air intake according to one of claims 1 to 2, wherein the distance (ΔP) between the disturbance member (4, 4') and the ventilation opening (3) is between 0.5 and 3 times the length (P4) of the disturbance member (4, 4').

4. The air intake according to one of claims 1 to 3, wherein the distance (ΔP) between the disturbance member (4, 4') and the ventilation opening (3) is less than 2 times the length (P3) of the ventilation opening (3).

5. The air intake according to one of claims 1 to 4, wherein the disturbance member (4, 4') has a height (N4) between 0.2 and 1 time the length (P4) of the disturbance member (4, 4').

6. The air intake according to one of claims 1 to 5, wherein the disturbance member (4, 4') is mounted as an insert to the external wall (22).

7. The air intake according to one of claims 1 to 6, wherein, with the external wall (22) comprising a through opening (400) for mounting, positioned upstream of the ventilation opening (3), the disturbance member (4, 4') extends through the through opening (400) for mounting, preferably from within the internal cavity (24).

8. The air intake according to one of claims 1 to 7, wherein the vortex generating member (4') comprises a plurality of projecting ridges (42').

FIG 1

FIG 2

FAC

EXT

203

103

EXT

103

201

202

**FIG 3**

EXT

F

22    26

23

INT

24    25

21

11

1

X

20    12

2

3

**FIG 4**

EXT

FAC

N

P

4

22

3

23

24

25

21

FIG 5

4

Q4

3

Q3

22

EXTm

P4

EXT

ΔP

Q

P3

P

FIG 6

FIG 7

FIG 8

FIG 9

FIG 10

FIG 11

FIG 12

FIG 13A

FIG 13B

FIG 14

FIG 15A

FIG 15b

FIG 16

FIG 17

FIG 18

FIG 19

FIG 20

FIG 21

FIG 22

FIG 23

FIG 24

FIG 25

FIG 26

FIG 27

FIG 28

FIG 29

FIG 30

FIG 31

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5257498 A
- EP 0921293 A

- US 2015001003 A